Europäisches Patentamt

European Patent Office

Office européen des brevets

(19)

(11) Numéro de publication: **0 427 315 A2**

# (12) DEMANDE DE BREVET EUROPEEN

(21) Numéro de dépôt: 90202853.9

(22) Date de dépôt: 26.10.90

(51) Int. Cl.⁵: **H01M 4/42, C22C 1/04**

(30) Priorité: **10.11.89 BE 8901197**

(43) Date de publication de la demande:
**15.05.91 Bulletin 91/20**

(84) Etats contractants désignés:
**BE CH DE DK ES FR GB IT LI NL**

(71) Demandeur: **S.A. ACEC-UNION MINIERE N.V.**
**avenue Emile Rousseau**
**B-6001 Marcinelle (Charleroi)(BE)**

(72) Inventeur: **Meeus, Marcel L.**
**Harkstraat 29**
**B-3920 Lommel(BE)**
Inventeur: **Strauven, Yvan A.J.**
**Hayenhoek 29**
**B-3910 Neerpelt(BE)**

(74) Mandataire: **Saelemaekers, Juul et al**
**c/o MHO Division de S.A ACEC-Union**
**Minière N.V. Adolf Greinerstraat 14**
**B-2660 Hoboken(BE)**

(54) **Poudre de zinc pour batteries alcalines.**

(57) La poudre est exempte de Cd et de Tl et elle contient 0,005-2 % d'aluminium ainsi que
soit 0,0001-0,01 % de MTR, MTR étant un métal du groupe des terres rares ou un mélange de métaux du groupe des terres rares;
soit, outre le zinc et des impuretés inévitables, exclusivement 0,0001-2 % d'au moins un des éléments indium ou MTR;
soit, outre le zinc et des impuretés inévitables, exclusivement 0,003-2 % de bismuth et 0,0001-2% d'au moins un des éléments indium ou MTR;
soit, outre le zinc et des impuretés inévitables, exclusivement 0,005-2 % de plomb et 0,0001-2 % d'au moins un des éléments indium ou MTR;
soit, outre le zinc et des impuretés inévitables, exclusivement 0,005-2% de plomb, 0,003-2 % de bismuth et 0,0001-2 % d'au moins un des éléments indium ou MTR.

EP 0 427 315 A2

## POUDRE DE ZINC POUR BATTERIES ALCALINES

La présente invention se rapporte à une poudre à base de zinc pour batteries alcalines.

Les poudres de zinc connues pour batteries alcalines ont, soit une teneur élevée en mercure, soit contiennent du Cd et/ou du Tl. C'est pourquoi ces poudres ont une bonne résistance à la corrosion dans l'électrolyte de la batterie. Cependant le mercure est toxique, et Cd et Tl sont très toxiques. Les poudres de zinc connues sont donc très défavorables pour l'environnement.

Le but de la présente invention est de fournir une poudre à base de zinc pour batteries alcalines, qui ne contient pas ou peu de mercure et est exempte de Cd et de Tl et a néanmoins une résistance à la corrosion suffisante.

La poudre selon l'invention est caractérisée en ce qu'elle contient 0,005-2 % d'aluminium ainsi que

soit 0,0001-0,01 % de MTR, MTR étant un métal du groupe des terres rares ou un mélange de métaux du groupe des terres rares;

soit, outre le zinc et des impuretés inévitables, exclusivement 0,0001-2 % d'au moins un des éléments indium ou MTR;

soit, outre le zinc et des impuretés inévitables, exclusivement 0,003-2 % de bismuth et 0,0001-2 % d'au moins un des éléments indium ou MTR;

soit, outre le zinc et des impuretés inévitables, exclusivement 0,005-2 % de plomb et 0,0001-2 % d'au moins un des éléments indium ou MTR;

soit, outre le zinc et des impuretés inévitables, exclusivement 0,005-2 % de plomb, 0,003-2 % de bismuth et 0,0001-2 % d'au moins un des éléments indium ou MTR.

Toutes les teneurs, dans cette demande de brevet sont exprimées en pourcentage en poids par rapport au zinc.

MTR peut être n'importe quel métal du groupe des terres rares, comme par exemple La, Ce, Pr ou Nd, ou n'importe quel mélange de métaux du groupe des terres rares, tel par exemple un mélange de La et de Ce. Pour des raisons économiques, MTR est de préférence du misch-metall, un alliage d'environ 45 % de Ce, 45 % de La et 10 % d'autres métaux du groupe des terres rares.

Lorsque la poudre contient 0,005-2 % d'aluminium et 0,0001-0,01 % de MTR, elle peut aussi contenir un ou plusieurs des éléments suivants : Hg (maximum 0,2 %), Pb (0,005-2 %), Bi (0,003-2 %), Ga (0,005-0,2 %), Mn (0,005-0,2 %), un métal alcalin (0,005-0,2 %), un métal alcalino-terreux (0,005-0,2 %).

Des compositions préférentielles de la poudre selon l'invention font l'objet des revendications 2-25 ci-annexées.

Une manière simple pour produire la poudre de l'invention consiste à ajouter tous les additifs qui doivent être présents dans la poudre à produire (Al et par exemple In, Pb et Bi) au zinc fondu et de pulvériser l'alliage ainsi obtenu avec du gaz, de l'eau ou un mélange des deux.

On peut également pulvériser du zinc fondu, qui contient déjà une partie de ces additifs (par exemple : Al, Pb et Bi), après quoi le reste des additifs (par exemple : In) est déposé sur la poudre pulvérisée, soit par cémentation à partir d'une solution aqueuse, soit par dépôt physique à partir d'une phase gazeuse ("Physical Vapour Deposition" ou PVD), soit par dépôt chimique à partir d'une phase gazeuse ("Chemical Vapour Deposition" ou CVD). Il est clair que la technique de cémentation ne peut être appliqué que lorsqu' il s'agit d'additifs qui sont plus électropositifs que le zinc. Lorsque plusieurs additifs doivent être déposés sur la poudre pulvérisée, ceux-ci peuvent être déposés simultanément ou séparement.

On peut aussi pulvériser du zinc fondu à l'état pur et déposer ensuite tous les additifs sur la poudre pulvérisée.

Il est également possible d'introduire partiellement un additif déterminé par le zinc fondu et le reste par dépôt sur la poudre pulvérisée.

Lorsque du mercure est introduit, il peut être, soit ajouté au zinc fondu, soit déposé sur la poudre pulvérisée par cémentation, par dépôt à partir d'une phase gazeuse ou par amalgamation. Si la poudre pulvérisée est amalgamée, il est possible d'introduire en même temps que Hg d'autres additifs, comme par exemple In, entièrement ou partiellement, en amalgamant par exemple avec un amalgame Hg-In. Le mercure peut également être introduit partiellement par le zinc fondu et partiellement par dépôt sur la poudre pulvérisée. Au lieu de pulvériser avec du gaz, de l'eau ou un mélange des deux, on peut appliquer n'importe quelle technique qui est appropriée pour transformer un métal fondu en poudre, comme par exemple la pulvérisation centrifuge ou la coulée et fractionnement du métal coulé.

Les exemples décrits ci-après démontrent que des poudres selon l'invention ont une bonne résistance à la corrosion.

### EXEMPLE 1

En partant de zinc raffiné thermiquement on prépare un bain fondu de zinc contenant 220 ppm Al, 5 ppm La, 12 ppm Ce, 500 ppm Pb et 54 ppm In. On homogénéise ce bain fondu à 450°C par agitation. On fait s'écouler l'alliage fondu dans un jet d'air comprimé en produisant ainsi une poudre d'alliage dont les particules ont sensiblement la même composition homogène que celle du bain fondu homogène.

On tamise la poudre d'alliage de manière à en séparer la fraction supérieure à 500μm et, dans la mesure du possible, la fraction inférieure à 75μm. On obtient ainsi une poudre d'alliage d'une granulométrie de 75 à 500μm.

On examine la résistance de cette poudre à la corrosion en milieu alcalin. On utilise à cet effet un électrolyte constitué de 38 : de KOH, 2 % de ZnO et 60 % de $H_2O$. On introduit 25 g de la poudre dans 160 ml de cet électrolyte, que l'on maintient à 45°C, et on détermine la quantité d'hydrogène qui se dégage de l'électrolyte en 3, 7 et 13 jours. On trouve que les vitesses de dégagement gazeux ("gassing rate") sont respectivement (en μ par gramme de poudre et par jour) de 4,6; 4,2 et 3,9.

### EXEMPLE 2

On opère de la même façon que dans l'exemple 1, mais on prépare maintenant un bain fondu de zinc contenant 600 ppm Al, 500 ppm Pb, 500 ppm Bi et 100 ppm In.

On trouve respectivement des vitesses de dégagement gazeux (en μl/g/jour) de 5,6; 4,7 et 4,2.

D'autres exemples typiques de poudres selon l'invention ont la composition suivante :

Zn - 0,04 % Al - 0,02 % In - 0,05 % Pb - 0,013 % Bi

Zn - 0,05 % Al - 0,02 % In - 0,04 % Pb

Zn - 0,06 % Al - 0,015 % In - 0,06 % Pb

Zn - 0,03 % Al - 0,0025 % La - 0,0025 % Ce - 0,05 % Pb

Zn - 0,05 % Al - 0,0025 % La - 0,0025 % Ce - 0,05 % Pb

Zn - 0,05 % Al - 0,003 % La - 0,003 % Ce - 0,05 % Pb

Zn - 0,04 % Al - 0,02 % In

Zn - 0,05 % Al - 0,002 % Ce - 0,002 % La

Zn - 0,04 % Al - 0,025 % In - 0,003 % Ce - 0,003 % La

Zn - 0,04 % Al - 0,015 % In - 0,002 % Ce - 0,002 % La - 0,05 % Hg

Zn - 0,04 % Al - 0,025 % In - 0,003 % Ce - 0,003 % La - 0,01 % Hg

Zn - 0,05 % Al - 0,015 % In - 0,05 % Pb

Zn - 0,04 % Al - 0,002 % Ce - 0,002 % La - 0,04 % Pb

Zn - 0,05 % Al - 0,025 % In - 0,003 % Ce - 0,003 % La - 0,06 % Pb

Zn - 0,05 % Al - 0,02 % In - 0,002 % Ce - 0,002 % La - 0,05 % Hg -0,04 % Pb

Zn - 0,05 % Al - 0,015 % In - 0,003 % Ce - 0,003 % La - 0,01 % Hg -0,06 : Pb

Zn - 0,04 % Al - 0,02 % In - 0,02 % Bi

Zn - 0,05 % Al - 0,002 % Ce - 0,002 % La - 0,03 % Bi

Zn - 0,04 % Al - 0,02 % In - 0,003 % Ce - 0,003 % La - 0,01 % Bi

Zn - 0,04 % Al - 0,015 % In - 0,002 % Ce - 0,002 % La - 0,05 % Hg - 0,03 % Bi

Zn - 0,04 % Al - 0,025 % In - 0,003 % Ce - 0,003 % La - 0,01 % Hg - 0,02 % Bi

Zn - 0,05 % Al - 0,015 % In - 0,05 % Pb - 0,03 % Bi

Zn - 0,04 % Al - 0,002 % Ce - 0,002 % La - 0,05 % Pb - 0,01 % Bi

Zn - 0,05 % Al - 0,02 % In - 0,003 % Ce - 0,003 % La - 0,05 % Pb -0,02 % Bi

Zn - 0,05 % Al - 0,015 % In - 0,002 % Ce - 0,002 % La - 0,05 % Hg -0,05 % Pb - 0,01 % Bi

Zn - 0,05 % Al - 0,025 % In - 0,003 % Ce - 0,003 % La - 0,01 % Hg -0,05 % Pb - 0,02 % Bi

Zn - 0,05 % Al - 0,002 % Ce - 0,002 % La - 0,03 % Mn

Zn - 0,04 % Al - 0,02 % In - 0,003 % Ce - 0,003 % La - 0,01 % Na

Zn - 0,04 % Al - 0,015 % In - 0,002 % Ce - 0,002 % La - 0,05 % Hg -0,03 % Ca

Zn - 0,04 % Al - 0,025 % In - 0,003 % Ce - 0,003 % La - 0,01 % Hg -0,02 % Sr

Zn - 0,04 % Al - 0,002 % Ce - 0,002 % La - 0,05 % Pb - 0,02 % Ga -0,02 % Na

Zn - 0,05 % Al - 0,02 % In - 0,002 % Ce - 0,002 % La - 0,05 % Pb -0,02 % Li

Zn - 0,05 % Al - 0,015 % In - 0,003 % Ce - 0,003 % La - 0,05 % Hg -0,05 % Pb - 0,02 % Mn

Zn - 0,05 % Al - 0,025 % In - 0,002 % Ce - 0,002 % La - 0,01 % Hg -0,05 % Pb - 0,02 % Ca

Zn - 0,05 % Al - 0,002 % Ce - 0,003 % La - 0,03 % Bi - 0,02 % Mn -0,01 % Li

Zn - 0,04 % Al - 0,02 % In - 0,002 % Ce - 0,002 % La - 0,02 % Bi -0,02 % Ga

Outre le zinc et des impuretés inévitables, ces poudres ne contiennent rien d'autre que les additifs cités. Des impuretés inévitables sont les impuretés présentes dans le zinc et dans les additifs.

### Revendications

1. Poudre à base de zinc pour batteries alcalines, caractérisée en ce qu'elle contient 0,005-2 % d'aluminium ainsi que
soit 0,0001-0,01 % de MTR, MTR étant un métal du groupe des terres rares ou un mélange de métaux du groupe des terres rares;

soit, outre le zinc et des impuretés inévitables, exclusivement 0,0001-2 % d'au moins un des éléments indium ou MTR;

soit, outre le zinc et des impuretés inévitables, exclusivement 0,003-2 % de bismuth et 0,0001-2 % d'au moins un des éléments indium ou MTR;

soit, outre le zinc et des impuretés inévitables, exclusivement 0,005-2 % de plomb et 0,0001-2 % d'au moins un des éléments indium ou MTR;

soit, outre le zinc et des impuretés inévitables, exclusivement 0,005-2 % de plomb, 0,003-2 % de bismuth et 0,0001-2 % d'au moins un des éléments indium ou MTR.

2. Poudre selon la revendication 1, caractérisée en ce qu'elle contient 0,005-0,5 % d'Al.

3. Poudre selon la revendication 2, caractérisée en ce qu'elle contient 0,005-0,1 % d'Al.

4. Poudre selon la revendication 3, caractérisée en ce qu'elle contient 0,005-0,06 % d'Al.

5. Poudre selon la revendication 4, caractérisée en ce qu'elle contient 0,02-0,06 % d'Al.

6. Poudre selon une des revendications 1-5, caractérisée en ce qu'elle contient 0,0025-0,2 % d'In.

7. Poudre selon la revendication 6, caractérisée en ce qu'elle contient 0,0025-0,05 % d'In.

8. Poudre selon une des revendications 1-7, caractérisée en ce qu'elle contient 0,0001-0,2 % de MTR.

9. Poudre selon la revendication 8, caractérisée en ce qu'elle contient 0,0001-0,05 % de MTR.

10. Poudre selon la revendication 9, caractérisée en ce qu'elle contient 0,0001-0,01 % de MTR.

11. Poudre selon la revendication 10, caractérisée en ce qu'elle contient 0,0001-0,005 % de MTR.

12. Poudre selon la revendication 11, caractérisée en ce qu'elle contient 0,0003-0,005 % de MTR.

13. Poudre selon une des revendications 1-12, caractérisée en ce qu'elle contient jusqu'à 0,2 % de Hg.

14. Poudre selon la revendication 13, caractérisée en ce qu'elle contient jusqu'à 0,05 % de Hg.

15. Poudre selon la revendication 14, caractérisée en ce qu'elle contient jusqu'à 0,01 % de Hg.

16. Poudre selon une des revendications 1-12, caractérisée en qu'elle est exempte de Hg.

17. Poudre selon une des revendications 1-16, caractérisée en ce qu'elle contient 0,005-2 % de Pb.

18. Poudre selon la revendication 17, caractérisée en ce qu'elle contient 0,005-0,2 % de Pb.

19. Poudre selon la revendication 18, caractérisée en ce qu'elle contient 0,01-0,1 % de Pb.

20. Poudre selon une des revendications 1-19, caractérisée en ce qu'elle contient 0,003-2 % de Bi.

21. Poudre selon la revendication 20, caractérisée en ce qu'elle contient 0,003-0,2 % de Bi.

22. Poudre selon la revendication 21, caractérisée en ce qu'elle contient 0,003-0,05 % de Bi.

23. Poudre selon une des revendications 1-22, caractérisée en ce qu'elle contient 0,005-0,2 % d'au moins un élément du groupe des éléments consistant en Ga, Rn, les métaux alcalins et les métaux alcalino-terreux.

24. Poudre selon la revendication 23, caractérisée en ce qu'elle contient 0,005-0,07 % d'au moins un élément du groupe cité.

25. Poudre selon une des revendications précédentes caractérisée en ce que ses éléments restants sont du Zn et des impuretés inévitables.